# EUROPÄISCHE PATENTANMELDUNG

(11) **EP 1 061 728 A1**
(43) Veröffentlichungstag der Anmeldung: **20.12.2000**
(21) Anmeldenummer: 99109967.2
(22) Anmeldetag: 20.05.1999
(51) Int. Cl.: H04M 7/00

(54) **Least-cost-routing-Verfahren mit Internet-Nutzung**

(71) Anmelder: teledis Telecom Dienstleistungen AG, 66538 Neunkirchen (DE)
(72) Erfinder: Lex, Roman, 66538 Neunkirchen (DE)
(74) Vertreter: Schoppe, Fritz, Dipl.-Ing.

(57) **Zusammenfassung**

Bei einem Verfahren zum Aufbauen einer Gesprächsverbindung zwischen zumindest zwei Gesprächsteilnehmern, bei dem ein erster Gesprächsteilnehmer einen zweiten Gesprächsteilnehmer mit dessen Telefonrufnummer anwählt, wird als erstes überprüft, ob der Telefonrufnummer des angewählten Gesprächsteilnehmers auch ein IP-Adresse für eine Internettelefonverbindung zugeordnet ist. Falls keine IP-Adresse für eine Internettelefonverbindung zugeordnet ist, wird die Gesprächsverbindung über einen Telefonnetzanbieter mittels Least-Cost-Routing aufgebaut. Falls eine IP-Adresse für eine Internettelefonverbindung zugeordnet ist, wird überprüft, ob die Gebühren für die Internettelefonverbindung mit der IP-Adresse oder die Telefonnetzanbieterverbindung günstiger sind. Falls die Telefonverbindungskosten mit der IP-Adresse günstiger sind, wird eine Gesprächsverbindung über einen Telefonnetzanbieter aufgebaut. Falls dagegen die Internettelefonverbindung günstiger ist, wird eine Internettelefonverbindung mit dem angewählten Gesprächspartner über die IP-Adresse aufgebaut.

## Beschreibung

Die vorliegende Erfindung bezieht sich auf ein Verfahren zum Aufbauen einer Gesprächsverbindung zwischen zumindest zwei Gesprächsteilnehmern, bei dem die günstigsten Gesprächsverbindungen gewählt werden, damit möglichst niedrige Verbindungsgebühren für das Gespräch anfallen.

Für solche Verfahren wird im allgemeinen ein sogenannter Least-Cost-Router verwendet. Ein Least-Cost-Router für Telefonnetzanbieter arbeitet üblicherweise nach dem Verfahren der Carrier-Selection (Call-By-Call), indem der Least-Cost-Router die vom Teilnehmer gewählte Rufnummer entgegennimmt und transparent für den Teilnehmer je nach gewählter Vorwahl und momentaner Uhrzeit aufgrund seiner gespeicherten Telefonnetzanbieterdaten den günstigsten Netzanbieter ermittelt, dessen Netzbetreiberkennzahl vor die Rufnummer setzt und einen Wählvorgang durchführt. Dadurch wird erreicht, daß der Least-Cost-Router für den Kunden immer automatisch die günstigste Gesprächsverbindung wählt.

Eine weitere Möglichkeit für den Kunden, die Gebühren für eine Gesprächsverbindung möglichst niedrig zu halten, besteht darin, auf die Internet-Telefonie, d.h. auf eine Gesprächsverbindung über Internet, zurückzugreifen. Insbesondere bei Ferngesprächen und vor allem bei Auslandsgesprächen liegen die Verbindungsgebühren für eine Telefonverbindung mittels eines Telefonnetzanbieters deutlich über den Verbindungsgebühren für eine Internettelefonverbindung. Dadurch erklärt sich das ständig steigende Interesse für einfach aufzubauende Internettelefonverbindungen, vor allem da sich die Sprach- und Übertragungsqualität dieser Verbindungen immer weiter verbessert hat. Das Internet gewinnt daher als Kommunikationsmedium immer mehr an Bedeutung.

Um eine Gesprächsverbindung über das Internet realisieren zu können, ist es im allgemeinen erforderlich, die IP-Adresse (IP = Internet Protocol) des Gesprächspartners zu kennen. Für das Telefonieren über eine Internetverbindung werden bereits unterschiedliche Lösungen vorgeschlagen. Bei diesen Marktlösungen ist es jedoch erforderlich, daß zum Aufbauen einer Telefonverbindung über das Internet beiden Gesprächspartnern ein kompatibles Gerät zur Verfügung steht, um die Verbindung aufbauen zu können. Die Gespräche können dann von PC zu PC oder von Telefon zu PC oder von Telefon zu Telefon geführt werden.

Eine weitere Möglichkeit zum Aufbauen einer Gesprächsverbindung über das Internet besteht darin, auf die Software eines Internettelefonie-Anbieters zurückzugreifen. Die Internettelefonie ist eine Technologie, die es ermöglicht, Telefonanrufe ins In- und Ausland von einem PC aus vorzunehmen, und jedes beliebige Telefon auf der Welt anzuwählen. Die Internet-Software des Internettelefonie-Anbieters versetzt jeden beliebigen Internetanwender in die Lage, mit Hilfe eines PC's, der über eine Spracheingabe und Sprachausgabe verfügt, Anrufe von einem PC aus zu tätigen, und über das Internet zu Telefonschaltstellen zu senden. Die Telefonschaltstellen leiten die Anrufe dann ohne Verzögerung und automatisch an ihren endgültigen Zielort, z.B. ein beliebiges Telefon, weiter, woraufhin nun das Telefongespräch geführt werden kann.

Bei den Tarifstrukturen für Internet-Zugänge findet man auch die unterschiedlichsten Modelle. So gibt es Internet-Provider, die einen monatlichen Pauschalbetrag verlangen, andere wiederum rechnen nach Online-Zeit ab, wieder andere geben eine gewisse Anzahl von kostenlosen Online-Stunden an die Kunden weiter. Immer häufiger findet man auch Angebote für "Internet-By-Call" auf dem Markt. Dies bedeutet, daß man sich nicht an einen Provider (Anbieter) für einen Internetzugang zu binden muß. Will man jedoch den Internet-Provider wechseln, um beispielsweise den günstigeren Tarif eines anderen Internet-Provider zu nutzen, so ist dies mit sehr aufwendigen Veränderungen der Grundeinstellungen und Konfigurationen am PC verbunden. Aus diesem Grund ist bisher noch kein reines Least-Cost-Routing für Internet-Telefonie beziehungsweise den Internetzugang realisiert worden.

Das Telefonieren über eine Internetverbindung bietet zwar eine bezüglich der anfallenden Telefongebühren kostengünstige Alternative zum Telefonieren über einen Telefonnetzanbieter, da in der Regel beim Telefonieren über eine Internetverbindung nur die Telefongebühren bis zum Internet-Provider zuzüglich der online-Gebühren des Internet-Providers für den Internetzugang gezahlt werden müssen, aber es treten auch einige Nachteile bzw. Schwierigkeiten für den Kunden beim Einrichten einer Gesprächsverbindung über das Internet auf.

So ist es beim Telefonieren über eine Internetverbindung im allgemeinen erforderlich, die Hardwarevorraussetzungen, d.h. beispielsweise eine PC-Soundkarte mit Boxen und Mikrofon, für eine Spracheingabe und Sprachausgabe bereitzustellen, wobei das PC-System dann noch geeignet eingestellt und konfiguriert werden muß.

Darüberhinaus müssen an dem PC die geeigneten Softwareprogramme installiert und eingerichtet werden, die für eine Telefonverbindung über Internet notwendig sind. Der Kunde muß dann das Programm aufrufen und die entsprechenden Programmschritte durchlaufen, um die Gesprächsverbindung aufzubauen, wobei der Kunde jedoch keine Informationen darüber besitzt, ob die Gesprächsverbindung über Internet wirklich günstiger als eine Telefonverbindung über einen Telefonnetzanbieter ist.

Ausgehend von diesem Stand der Technik besteht die Aufgabe der vorliegenden Erfindung darin, ein Verfahren zu schaffen, das die optionale Nutzung des Internets als Telefonverbindung vereinfacht.

Diese Aufgabe wird durch ein Verfahren zum Aufbauen einer Gesprächsverbindung zwischen zumindest zwei Gesprächsteilnehmern gemäß Anspruch 1 und 10 gelöst.

Die vorliegende Erfindung schafft ein Verfahren zum Aufbauen einer Gesprächsverbindung zwischen zumindest zwei Gesprächsteilnehmern, wobei ein erster Gesprächsteilnehmer einen zweiten Gesprächsteilnehmer mit dessen Telefonrufnummer anwählt. Daraufhin wird überprüft, ob der Telefonrufnummer des angewählten Gesprächsteilnehmers auch eine IP-Adresse für eine Internettelefonverbindung zugeordnet ist. Falls keine IP-Adresse für eine Internettelefonverbindung zugeordnet ist, wird die Gesprächsverbindung über einen Telefonnetzanbieter mittels Least-Cost-Routing aufgebaut. Falls jedoch der Telefonnummer eine IP-Adresse für eine Gesprächsverbindung über Internet zugeordnet ist, wird überprüft, ob die Gebühren für die Internettelefonverbindung oder die Telefonnetzanbieterverbindung günstiger sind. Falls nun die Telefonverbindungskosten günstiger sind, wird eine Gesprächsverbindung über einen Telefonnetzanbieter aufgebaut, wohingegen eine Gesprächsverbindung mit der IP-Adresse über Internet mit dem angewählten Gesprächspartner aufgebaut wird, falls die Internetverbindung günstiger ist.

Gemäß einem ersten Ausführungsbeispiel der vorliegenden Erfindung wird vor Herstellung einer Gesprächsverbindung zwischen zumindest zwei Gesprächsteilnehmern zunächst überprüft, ob dem anderen Gesprächsteilnehmer, mit dem Kontakt aufgenommen werden soll, neben der üblichen Telefonnummer noch eine IP-Adresse (IP = Internet protocol) zugeordnet ist, um daraufhin zu überprüfen, ob eine IP-Verbindung aufgebaut werden kann, um ein Internettelefongespräch durchzuführen. Daraufhin werden die geschätzten, anfallenden Kosten für die Internettelefonverbindung mit den Kosten für eine Telefonverbindung über einen Telefonnetzanbieter verglichen, um für den Fall, daß sich das Internet aufgrund der vorhandenen IP-Adresse des anderen Gesprächsteilnehmers und der günstigen Datenverkehrssituation als verfügbar erweist und die geschätzten anfallenden Kosten für eine Internetverbindung niedriger sind als für die anderer Provider bzw. Telefonnetzanbieter, automatisch die Gesprächsverbindung über das Internet herzustellen.

Ferner ist es gemäß einem zweiten Ausführungsbeispiel der vorliegenden Erfindung möglich, falls keine IP-Telefonverbindung über das Internet aufgebaut werden kann bzw. keine IP-Nummer für den Gesprächspartner vorliegt, zusätzlich zu überprüfen, ob eine Internettelefonverbindung über die Internet-Software eines Internettelefonie-Anbieters einerseits möglich ist, als auch ob die geschätzten anfallenden Kosten für diese Verbindung niedriger sind als die geschätzten anfallenden Kosten für eine Gesprächsverbindung über einen normalen Telefonnetzanbieter. Falls ein Verbindungsaufbau über den Internettelefonie-Anbieter einerseits möglich ist, als auch die geschätzten Verbindungskosten günstiger sind als über die normalen Telefonnetzanbieter, kann das gewünschte Telefongespräch über die Internet-Software des Internettelefonie-Anbieters von dem PC des Anrufers über das Internet direkt zu einem normalen Telefon des Gesprächspartners durchgestellt werden. Falls jedoch die abgeschätzten anfallenden Verbindungskosten über den Internettelefonie-Anbieter höher sind als die für einen normalen Telefonnetzanbieter, wird das Telefongespräch beispielsweise mittels Least-Cost-Routing über den günstigsten Telefonnetzanbieter aufgebaut.

Weiterbildungen der vorliegenden Erfindung sind in den abhängigen Ansprüchen aufgeführt.

Bevorzugte Ausführungsbeispiele der vorliegenden Erfindung werden nochfolgend unter Bezugnahme auf die beiliegenden Zeichnungen näher erläutert. Es zeigen:
- Fig. 1: ein Ablaufdiagramm eines ersten bevorzugten Ausführungsbeispiels für ein Verfahren zum Aufbauen einer Gesprächsverbindung zwischen zwei Gesprächsteilnehmern.
- Fig. 2: ein Ablaufdiagramm eines zweiten bevorzugten Ausführungsbeispiels für ein Verfahren zum Aufbauen einer Gesprächsverbindung zwischen zwei Gesprächsteilnehmern.

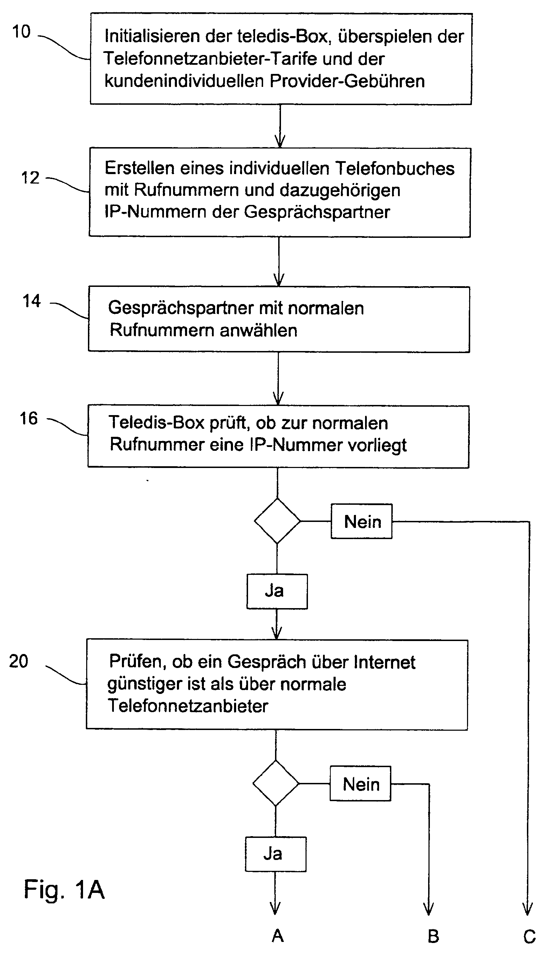

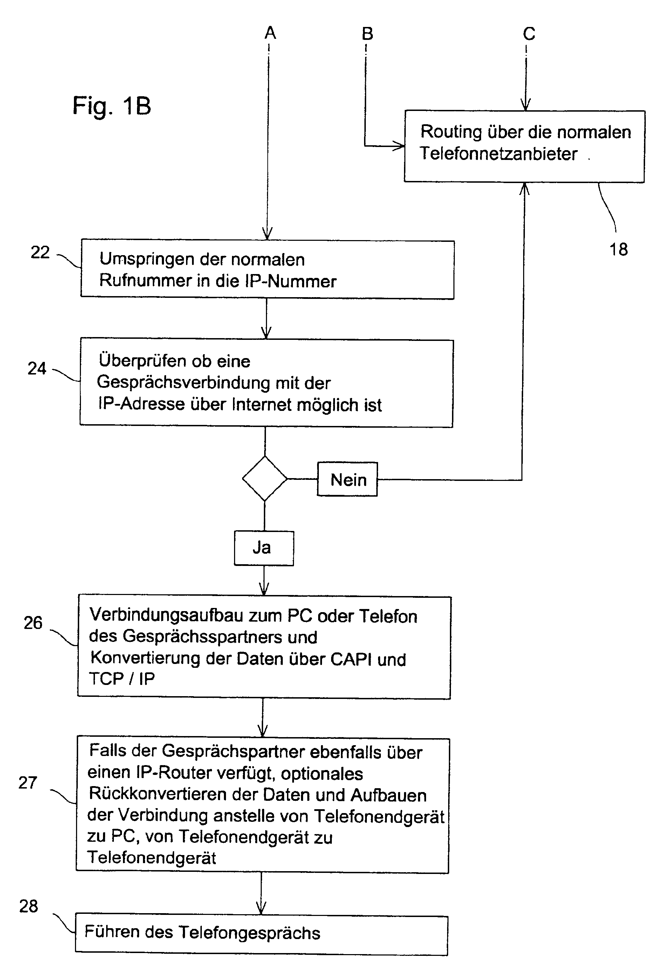

Fig. 1 zeigt ein Ablaufdiagramm, mittels dem das erfindungsgemäße Verfahren zum Aufbauen einer Gesprächsverbindung zwischen zumindest zwei Gesprächsteilnehmern entweder über eine Telefonnetzverbindung oder eine Internettelefonverbindung beispielhaft erläutert wird.

Das erfindungsgemäße Verfahren wird mit einem sogenannten IP-Router durchgeführt. Ein solcher IP-Router ist beispielsweise von der Firma "Teledis - Telecom Dienstleistungen AG" unter der Bezeichnung "Teledis Expert" erhältlich.

Zum Durchführen des erfindungsgemäßen Verfahrens ist es lediglich erforderlich, daß dieses Gerät bei dem Gesprächsteilnehmer, der eine Gesprächsverbindung zu einem weiteren Gesprächsteilnehmer aufbauen will, angeordnet ist. Der IP-Router wird dann in Verbindung mit einem Telefon bzw. einer Telefonanlage und/oder einem PC mit Internetzugang zum Aufbauen einer Gesprächsverbindung über einen Telefonnetzanbieter oder über das Internet verwendet.

Beim Installieren des Geräts muß der Kunde zunächst beispielsweise über eine Tastenkombination am Telefon oder am PC seine Ortskennzahl eingeben. Bei der Initialisierung des Geräts wird diese Ortskennzahl verwendet, um die Grundprogrammierung des Geräts über eine Datenverbindung mit einem Service-Center zu erhalten. Diese Grundprogrammierung enthält eine allgemeine, für das entsprechende Ortsnetz optimierte Zuordnung von Rufnummernbereichen und Uhrzeiten zu entsprechend günstigen Telefonnetzanbietern und gegebenenfalls unterschiedlichen Internet-Providern, wobei diese Informationen gemeinsam mit den Tarifen der Telefonnetzanbieter und den kundenindividuellen Gebühren der Internet-Provider beispielsweise von dem Service-Center an das Gerät überspielt werden (Block 10). Das Gerät ist somit in der Lage, abhängig von der gewählten Telefonnummer und z.B. der Uhrzeit den günstigsten Telefonnetzanbieter auszuwählen, oder das Telefongespräch über das Internet zu routen.

Als nächstes erstellt der Kunde sein individuelles Telefonbuch mit den Rufnummern und den dazugehörigen IP-Adressen der Gesprächspartner (Block 12). Dieses Erstellen des individuellen Telefonbuchs kann beispielsweise durchgeführt werden, indem über das Tastenfeld eines PC's die Rufnummern und gegebenenfalls die dazugehörigen IP-Adressen als Telefonbucheinträge eingegeben werden, wobei auch eine Eingabe über ein Telefon denkbar ist, oder indem ein bereits erstelltes elektronisches Telefonbuch als Datenbank in das Gerät, d.h. in den IP-Router, übernommen wird.

Wenn nun der Kunde eine Gesprächsverbindung mit einem Gesprächspartner aufnehmen will, ruft der Kunde über sein Telefonendgerät die normale Rufnummer oder die der Rufnummer zugeordnete Kurzwahlnummer des Gesprächspartners auf (Block 14).

Der IP-Router (z.B. die Teledis Box) prüft nun, ob zusätzlich zur normalen Rufnummer oder Kurzwahlnummer eine IP-Adresse für eine Internetverbindung vorliegt (Block 16). Wenn keine IP-Adresse für eine Internetverbindung zu dem Gesprächspartner vorliegt, wird über einen üblichen Telefonnetzanbieter eine Telefonverbindung zu dem Gesprächspartner aufgebaut (Block 18). Dieser Telefonverbindungsaufbau kann mittels des sogenannten Least-Cost-Routing-Verfahrens aufgebaut werden, bei dem der zum jeweiligen Zeitpunkt günstigste Telefonnetzanbieter für eine Telefonverbindung ausgewählt wird. Die Auswahl des günstigsten Telefonnetzanbieters wird mit den in Block 10 gespeicherten Daten bezüglich der unterschiedlichen Telefonnetzanbietertarife bzw. Gebühren durchgeführt.

Wenn jedoch der Rufnummer des Gesprächspartners ferner eine IP-Adresse für eine Internetverbindung zugeordnet ist, prüft der IP-Router, ob die geschätzten anfallenden Kosten für die Gesprächsverbindung über eine Internetverbindung günstiger als über einen normalen Telefonnetzanbieter sind (Block 20). Falls die geschätzten anfallenden Kosten für die Gesprächsverbindung über einen Telefonnetzanbieter günstiger sind, springt das Verfahren zu Block 18, bei dem der bereits beschriebene Aufbau einer Telefonverbindung z. B. mittels Least-Cost-Routing durchgeführt wird. Falls jedoch die abgeschätzten anfallenden Kosten für eine Internetverbindung niedriger als für eine Gesprächsverbindung über einen normalen Telefonnetzanbieter sind, springt der IP-Router von der normalen Telefonrufnummer in die IP-Adresse für eine Internetverbindung um (Block 22).

Vor dem Aufbau bzw. während des Aufbaus der Gesprächsverbindung über das Internet wird nun einerseits überprüft, ob aufgrund beispielsweise des Datenverkehrs im Internet ein Aufbau einer Gesprächsverbindung über das Internet möglich ist, als auch ob der Gesprächspartner momentan überhaupt "online" erreichbar ist (Block 24). Für die Internetverbindung können die zu übermittelnden Daten, d.h. die Gesprächsdaten, über CAPI (CAPI = Common ISDN application program interface) und TCP/IP (TCP = Transfer control protocol; IP = Internet protocol) konvertiert werden. Falls die Auslastung des Internets zu groß ist oder falls der Gesprächspartner nicht "online" erreichbar ist, wird das Gespräch wieder über einen normalen Telefonnetzanbieter vermittelt, d.h. das Verfahren springt wieder zu Block 18 zurück.

Falls es der Datenverkehr auf dem Internet erlaubt, eine Gesprächsverbindung herzustellen, und falls der Gesprächspartner "online" erreichbar ist, wird nun mit der IP-Adresse die Internettelefonverbindung zu dem PC bzw. zu dem mit dem Internet verbundenen Endgerät des Gesprächspartners aufgebaut (Block 26).

Sollte auch der Gesprächspartner einen IP-Router (z.B. eine Teledis Box) besitzen, ist möglich die übertragenen Gesprächsdaten zurückzukonvertieren, wobei das Gespräch dann anstelle von Telefonendgerät zu PC (d.h. mit dem Internet verbundenes Endgerät) nun von Telefonendgerät zu Telefonendgerät aufgebaut werden kann (Block 27).

Nach Annahme des Gesprächs durch den Gesprächspartner kann das Gespräch nun über die Internettelefonverbindung geführt werden (Block 28).

Bei diesem erfindungemäßen Verfahren zum Aufbauen einer Gesprächsverbindung zwischen zumindest zwei Gesprächsteilnehmern ist zu beachten, daß lediglich der Gesprächsteilnehmer, der den Anruf vornehmen will, über einen IP-Router verfügen muß, um die Gesprächsverbindung entweder über einen normalen Telefonnetzanbieter oder über einen Internet-Provider als Internettelefonverbindung aufzubauen.

Ferner sollte beachtet werden, daß der IP-Router dahingehend voreingestellt werden kann, daß, wenn beispielsweise die abgeschätzten anfallenden Verbindungskosten für eine Telefonverbindung über einen normalen Telefonnetzanbieter und für eine Internettelefonverbindung über einen Internet-Provider übereinstimmen, die Gesprächsverbindung automatisch über einen Telefonnetzanbieter aufgebaut wird, wobei jedoch auch die umgekehrte Voreinstellung denkbar ist.

Eine mögliche Weiterbildung des oben beschriebenen Verfahrens kann ferner darin bestehen, beim Einrichten der Internettelefonverbindung das sogenannte Internet-by-call-Verfahren zu verwenden, bei dem der IP-Router automatisch den günstigsten Internet-Provider ermittelt und auswählt, wobei der IP-Router selbständig die Konfigurationen für die unterschiedlichen Internet-Provider vornimmt und der IP-Router direkt eine Internetverbindung zu dem PC oder dem mit dem Internet verbunden Endgerät des Gesprächspartners aufbaut.

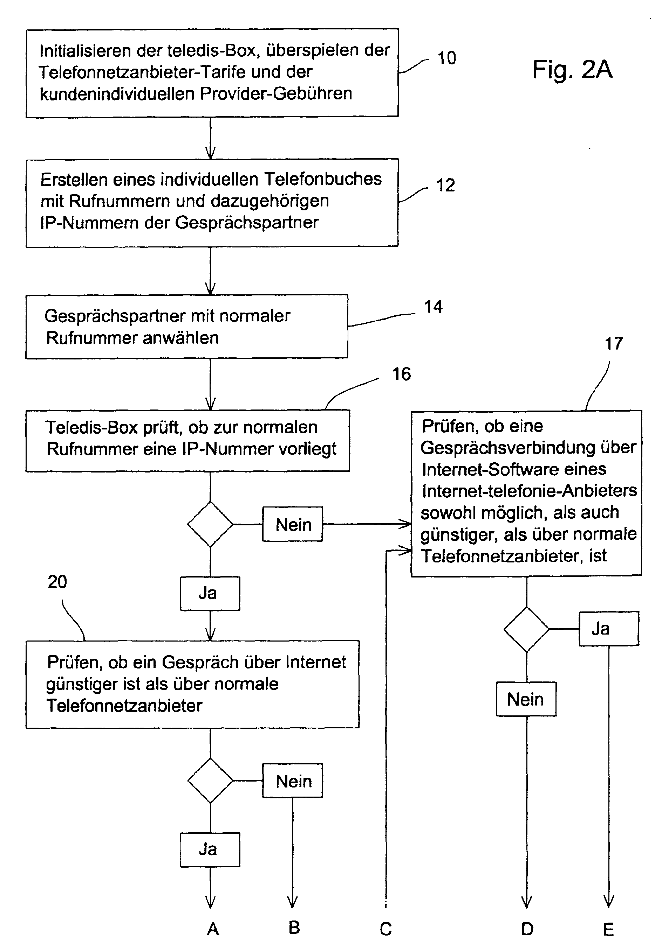

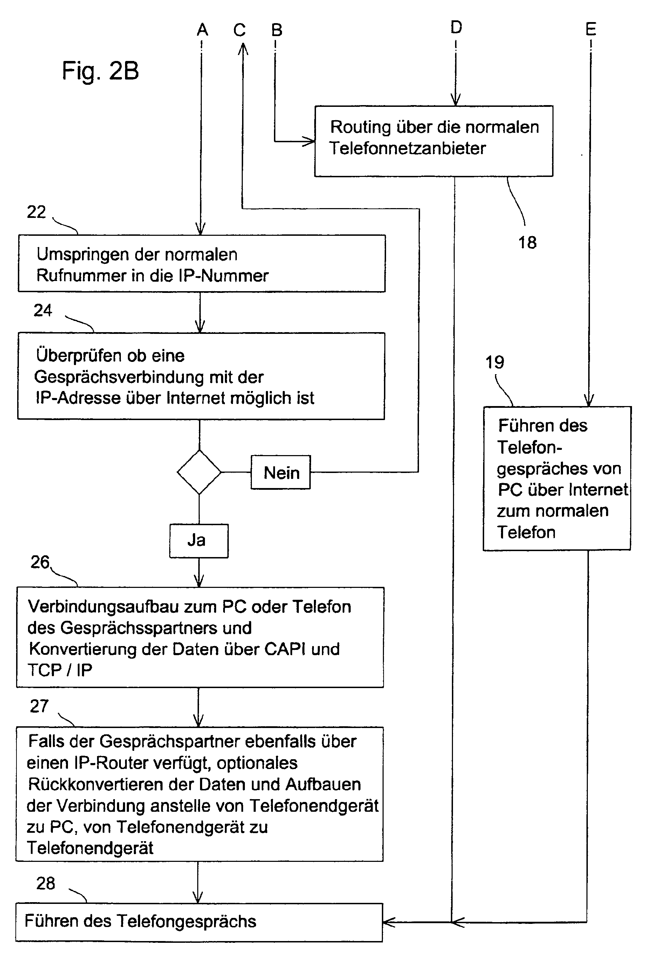

Fig. 2 zeigt ein Ablaufdiagramm eines zweiten erfindungsgemäßen Ausführungsbeispiels für ein Verfahren zum Aufbauen einer Gesprächsverbindung zwischen zumindest zwei Gesprächsteilnehmern. Den bereits anhand von Fig. 1 beschriebenen Verfahrensschritten sind in Fig. 2 die gleichen Bezugszeichen zugeordnet, wobei auf eine nochmalige detaillierte Beschreibung dieser Verfahrensschritte bei der Erläuterung von Fig. 2 verzichtet wird.

Wenn nach dem Anwählen des Gesprächspartners mit der normalen IP-Adresse in Block 14 die Überprüfung des IP-Routers in Block 16 ergeben hat, daß der normalen Rufnummer keine IP-Adresse zugeordnet ist, wird bei diesem Ausführungsbeispiel von dem IP-Router zusätzlich noch überprüft, ob einerseits eine Gesprächsverbindung über eine Internet-Software eines Internettelefonie-Anbieters möglich ist, als auch ob die geschätzten anfallenden Kosten für diese Gesprächsverbindung günstiger sind als über einen Telefonnetzanbieter (Block 17). Falls die Gesprächsverbindung über den Internettelefonie-Anbieter sowohl möglich ist als auch die geschätzten anfallenden Kosten günstiger sind, wird die Gesprächsverbindung von dem PC des Anrufers über das Internet direkt zu dem normalen Telefon des Gesprächspartners aufgebaut (Block 19). Wenn jedoch die abgeschätzten anfallenden Gesprächsverbindungskosten über einen normalen Telefonnetzanbieter günstiger sind, wird die Gesprächsverbindung beispielsweise mittels Least-Cost-Routing über einen normalen Telefonnetzanbieter mit dem Gesprächspartner aufgebaut (Block 18). Dieser Verfahrensschritt wurde bereits anhand von Fig. 1 ausführlich beschrieben.

Wenn jedoch zusätzlich zur normalen Rufnummer eine IP-Adresse für den Gesprächspartner vorliegt (Block 16), wird, wie bereits anhand von Fig. 1 beschrieben, in Block 20 überprüft, ob eine Gesprächsverbindung über Internet günstiger ist als über einen normalen Telefonnetzanbieter. Falls die geschätzten anfallenden Kosten für eine Gesprächsverbindung über die normalen Telefonnetzanbieter günstiger sind, wird das Telefongespräch über die Telefonnetzanbieter aufgebaut (Block 18). Wenn die abgeschätzten anfallenden Verbindungskosten über Internet günstiger sind, springt nun der IP-Router von der normalen Rufnummer auf die IP-Adresse des Gesprächpartners um (Block 22). Vor dem Aufbauen bzw. während des Aufbauens der Gesprächsverbindung über das Internet mittels der IP-Nummer wird nun überprüft, ob beispielsweise aufgrund des Datenverkehrs im Internet ein Aufbau der Gesprächsverbindung über das Internet möglich ist (Block 24).

In Block 24 wird ferner von dem IP-Router überprüft, ob der Gesprächspartner online erreichbar ist und für eine Gesprächsverbindung angerufen werden kann. Falls der Gesprächspartner online erreichbar ist (Block 24) und eine Gesprächsverbindung mit der IP-Adresse über das Internet möglich ist, wird, wie es bereits in Fig. 1 anhand der Verfahrensschritte 26, 27, 28 beschrieben wurde, die Verbindung zum PC des Gesprächspartners aufgebaut, woraufhin das Telefongespräch geführt werden kann.

Falls jedoch kein Aufbau einer Gesprächsverbindung über das Internet möglich ist bzw. der Gesprächspartner nicht online erreichbar ist, springt das Verfahren von Block 24 zurück zu Block 17, wobei der IP-Router dort wieder überprüft, ob mittels eines Internettelefonie-Anbieters oder eines normalen Telefonanbieters eine Gesprächsverbindung zu dem Gesprächspartner aufgebaut werden soll.

Um eine Gesprächsverbindung mittels eines Internettelefonie-Anbieters aufzubauen, wird von diesen Anbietern eine Internet-Software bereitgestellt, die die Telefonverbidung zwischen dem PC des Anrufers und dem Telefon des angerufenen Gesprächsteilnehmers ermöglicht. Diese Software wird auf den IP-Router (z.B. auf die Teledis Box) überspielt. Auch wenn der Gesprächspartner keine IP-Nummer besitzt, ermöglicht dies das Telefonieren über Internet, indem der IP-Router überprüft, ob eine Verbindung über einen Internettelefonie-Anbieter einerseits möglich ist, als auch ob die geschätzten anfallenden Kosten für eine solche Gesprächsverbindung günstiger sind als über einen Telefonnetzanbieter. Ist dies der Fall, wird die Gesprächsverbindung aufgebaut. Sollte jedoch eine Verbindung über einen Internettelefonie-Anbieter nicht günstiger und/oder nicht möglich sein, so wird das Gespräch beispielsweise mittels Least-Cost-Routing über einen normalen Telefonnetzanbieter geführt.

Ein Verbindungsaufbau über einen Internettelefonie-Anbieter liefert gegenüber herkömmlichen Telefonnetzanbietern eine Vielzahl von Vorteilen. So ist beispielsweise eine drastische Reduzierung der Telefongebühren im Vergleich zu herkömmlichen Gebühren für Ferngespräche, beispielsweise um bis zu 95%, möglich.

Da das Signal über das Internet übertragen wird und dann an eine dem IP-Router zugeordnete Schaltstelle gelangt, z.B. an eine Teledis-Schaltstelle, sind die Telefongebühren nicht von denen des Ursprungslands abhängig, so daß die Verbindungsgebühren im Bereich der Gebühren für Ortsgespräche gehalten werden können, egal von welcher Position (weltweit) die Gesprächsverbindung aufgebaut wird.

Dadurch kann jedes beliebige Telefon über einen PC erreicht werden. Somit benötigt nur noch der Anrufer einen PC mit Internetzugang. Die Gesprächspartner sind nicht mehr auf die PC-Zu-PC-Technologie beschränkt, bei der beide Teilnehmer Zugang zu Computern mit Internetverbindung haben müssen. Es ist außerdem nicht mehr notwendig, daß beide Teilnehmer zum Zeitpunkt des Gesprächs zufällig online sind oder dies vorher so vereinbaren müssen.

## Patentansprüche

1. Verfahren zum Aufbauen einer Gesprächsverbindung zwischen zumindest zwei Gesprächsteilnehmern, wobei ein erster Gesprächsteilnehmer einen zweiten Gesprächsteilnehmer mit dessen Telefonrufnummer anwählt, mit folgenden Schritten:
- Überprüfen (16), ob der Telefonrufnummer des angewählten Gesprächsteilnehmers auch eine IP-Adresse für eine Internettelefonverbindung zugeordnet ist,
- falls keine IP-Adresse für eine Internettelefonverbindung zugeordnet ist, Aufbauen (18) der Gesprächsverbindung über einen Telefonnetzanbieter;
- falls eine IP-Adresse für eine Internettelefonverbindung zugeordnet ist, Überprüfen (20), ob die geschätzten anfallenden Gebühren für die Internettelefonverbindung mit der IP-Adresse oder die Telefonnetzanbieterverbindung günstiger sind,
- falls die Telefonnetzanbieterverbindungskosten günstiger sind, Aufbauen (18) der Gesprächsverbindung über einen Telefonnetzanbieter, und
- falls die Kosten für eine Gesprächsverbindung mit IP-Adresse über Internet günstiger sind, Aufbauen (26) einer Internettelefonverbindung mit dem angewählten Gesprächspartner über die IP-Adresse.

2. Verfahren gemäß Anspruch 1, bei dem vor dem Schritt des Aufbauens (26) einer Gesprächsverbindung mit der IP-Adresse über das Internet überprüft wird (24), ob aufgrund des momentanen Datenverkehrs auf dem Internet eine Internettelefonverbindung möglich ist.

3. Verfahren gemäß Anspruch 1, bei dem vor dem Schritt des Aufbauens (26) einer Gesprächsverbindung über das Internet überprüft wird (24), ob der Gesprächspartner gegenwärtig für eine Internettelefonverbindung mit der IP-Adresse online erreichbar ist.

4. Verfahren gemäß Anspruch 2 oder 3, bei dem, falls ein Verbindungsaufbau mit der IP-Adresse über das Internet nicht möglich ist, automatisch eine Telefonverbindung über einen Telefonnetzanbieter aufgebaut wird (18).

5. Verfahren gemäß Anspruch 1, bei dem ein bevorzugter Verbindungstyp entweder über Internet oder über einen Telefonnetzanbieter festgelegt wird, falls die abgeschätzten anfallenden Gebühren für eine Telefonverbindung und eine Internettelefonverbindung gleich hoch sind.

6. Verfahren gemäß Anspruch 1 oder 4, bei dem für das Aufbauen (18) der Gesprächsverbindung über einen Telefonnetzanbieter ein sogenanntes Least-Cost-Routing verwendet wird.

7. Verfahren gemäß Anspruch 1, bei dem die Verbindung zu einem Internet-Provider durch ein sogenanntes Internet-by-call-Verfahren aufgebaut wird.

8. Verfahren gemäß Anspruch 1, bei dem die Daten für eine Gesprächsverbindung über Internet über den CAPI- und TCP/IP-Modus konvertiert werden.

9. Verfahren gemäß Anspruch 6 oder 7, bei dem die Tarifinformationen für das sogenannte Least-Cost-Routing und das sogenannte Internet-By-Call-Verfahren durch einen Service-Provider bereitgestellt und aktualisiert werden.

10. Verfahren gemäß Anspruch 1, bei dem, falls beide Gesprächspartner über einen IP-Router verfügen, die übertragenen Gesprächsdaten rückkonvertiert werden und eine Gesprächsverbindung von Telefonendgerät zu Telefonendgerät möglich ist.

11. Verfahren zum Aufbauen einer Gesprächsverbindung zwischen zumindest zwei Gesprächsteilnehmern, wobei ein erster Gesprächsteilnehmer einen zweiten Gesprächsteilnehmer mit dessen Telefonrufnummer anwählt, mit folgenden Schritten:
- Überprüfen (16), ob der Telefonrufnummer des angewählten Gesprächsteilnehmers auch eine IP-Adresse für eine Internettelefonverbindung zugeordnet ist,
- falls keine IP-Adresse für eine Internettelefonverbindung zugeordnet ist, Überprüfen (17), ob eine Verbindung über einen Internettelefonie-Anbieter einerseits möglich ist, als auch ob die geschätzten anfallenden Kosten für diese Verbindung günstiger als über einen Telefonnetzanbieter sind,
- falls die Telefonnetzanbieterverbindungskosten günstiger sind, Aufbauen (18) der Gesprächsverbindung über einen Telefonnetzanbieter, und
- falls die Gesprächsverbindung über einen Internettelefonie-Anbieter möglich ist und die geschätzten anfallenden Kosten für diese Gesprächsverbindung günstiger sind, Aufbauen (19) einer Internettelefonverbindung mit dem angewählten Gesprächspartner über den Internettelefonie-Anbieter.
- falls eine IP-Adresse für eine Internettelefonverbindung zugeordnet ist, Überprüfen (20), ob die geschätzten anfallenden Kosten für die Internettelefonverbindung mit der IP-Adresse oder die Telefonnetzanbieterverbindung günstiger sind,
- falls die Telefonnetzanbieterverbindungskosten günstiger sind, Aufbauen (18) der Gesprächsverbindung über einen Telefonnetzanbieter, und
- falls die Kosten für eine Gesprächsverbindung mit der IP-Verbindung über Internet günstiger sind, Aufbauen (26) einer Internettelefonverbindung mit dem angewählten Gesprächspartner über die IP-Adresse.

12. Verfahren gemäß Anspruch 11, bei dem vor dem Schritt des Aufbauens (26) einer Gesprächsverbindung mit der IP-Adresse über das Internet überprüft wird (24), ob eine Internettelefonverbindung mit der IP-Adresse möglich ist.

13. Verfahren gemäß Anspruch 12, bei dem vor dem Schritt des Aufbauens (26) einer Gesprächsverbindung über das Internet überprüft wird (24), ob aufgrund des momentanen Datenverkehrs auf dem Internet eine Internettelefonverbindung mit der IP-Adresse möglich ist.

14. Verfahren gemäß Anspruch 12, bei dem vor dem Schritt des Aufbauens (26) einer Gesprächsverbindung über das Internet überprüft wird (24), ob der Gesprächspartner gegenwärtig für eine Internettelefonverbindung mit der IP-Adresse online erreichbar ist.

15. Verfahren gemäß einem der Ansprüche 12 bis 14, bei dem, wenn die Überprüfung (24) ergibt, daß ein Verbindungsaufbau mit der IP-Adresse über das Internet nicht möglich ist, das Verfahren zu Schritt 17 zurückspringt und überprüft (17), ob eine Gesprächsverbindung über einen Internettelefonie-Anbieter einerseits möglich ist, als auch ob die geschätzten anfallenden Kosten für diese Verbindung über einen Internettelefonie-Anbieter günstiger sind als über einen Telefonnetzanbieter.

16. Verfahren gemäß Anspruch 11, bei dem die Gesprächsverbindung über der Internettelefonie-Anbieter vom PC des Anrufers zum Telefonendgerät des Gesprächspartners aufgebaut wird.

17. Verfahren gemäß Anspruch 11, bei dem ein bevorzugter Verbindungstyp entweder über Internet oder über einen Telefonnetzanbieter festgelegt wird, falls die abgeschätzten anfallenden Gebühren für eine Telefonverbindung und eine Internettelefonverbindung gleich hoch sind.

18. Verfahren gemäß Anspruch 11, bei dem für das Aufbauen (18) der Gesprächsverbindung über einen Telefonnetzanbieter ein sogenanntes Least-Cost-Routing verwendet wird.

19. Verfahren gemäß Anspruch 11, bei dem die Verbindung zu einem Internet-Provider durch ein sogenanntes Internet-by-call-Verfahren aufgebaut wird.

20. Verfahren gemäß Anspruch 11, bei dem die Daten für eine Gesprächsverbindung über Internet über den CAPI- und TCP/IP-Modus konvertiert werden.

21. Verfahren gemäß Anspruch 18 oder 19, bei dem die Tarifinformationen für das sogenannte Least-Cost-Routing und das sogenannte Internet-By-Call-Verfahren durch einen Service-Provider bereitgestellt und aktualisiert werden.

22. Verfahren gemäß Anspruch 11, bei dem, falls beide Gesprächspartner über einen IP-Router verfügen, die übertragenen Gesprächsdaten rückkonvertiert werden und eine Gesprächsverbindung von Telefonendgerät zu Telefonendgerät möglich ist.
